## Europäisches Patentamt
## European Patent Office
## Office européen des brevets

(19)

(11) Numéro de publication: **0 106 747**
**B1**

(12)

# FASCICULE DE BREVET EUROPEEN

(45) Date de publication du fascicule du brevet:
**09.04.86**

(51) Int. Cl.⁴: **B 60 K 15/02**

(21) Numéro de dépôt: **83401894.7**

(22) Date de dépôt: **27.09.83**

(54) **Réservoir de carburant à piège.**

(30) Priorité: **05.10.82 FR 8217109**

(43) Date de publication de la demande:
**25.04.84 Bulletin 84/17**

(45) Mention de la délivrance du brevet:
**09.04.86 Bulletin 86/15**

(84) Etats contractants désignés:
**DE GB IT**

(56) Documents cités:
**DE - A - 2 847 117**
**FR - A - 1 219 976**
**FR - A - 2 504 072**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Serus, Philippe Henri, 6, avenue Henri de la Touche, F-92290 Chatenay-Malabry (FR)**

(74) Mandataire: **Boivin, Claude, 9, rue Edouard-Charton, F-78000 Versailles (FR)**

LIBER, STOCKHOLM 1986

# Description

Les réservoirs de carburant des véhicules automobiles comportent souvent, au droit de la tubulure d'aspiration du carburant, un piège à carburant, c'est-à-dire un réceptacle de volume relativement faible dont le carburant ne peut que difficilement s'échapper. Ce piège garantit une bonne alimentation en carburant lorsque le réservoir est plat et présente une grande surface et que ce réservoir est soumis à des conditions dynamiques perturbatrices ou ne contient plus qu'une faible quantité de carburant. Ce piège constitue une réserve stabilisée de carburant qui supprime les déferlantes.

C'est ainsi notamment que la demande de brevet français FR—A—2 504 072 (publié le 22.10.82) décrit un piège délimité par deux parois semi-annulaires décalées transversalement l'une par rapport à l'autre, qui s'étendent sur toute la hauteur du réservoir et délimitent une chambre dans laquelle se trouvent à la fois la tubulure d'aspiration de carburant et un dispositif détecteur de niveau, cette chambre communiquant avec le réservoir par les passages séparant les deux parois. Du document DE—A—2 847 117 est également connu un réservoir de carburant à piège dans lequel le piège est constitué par une mervure ayant approximativement la forme d'une spirale qui est prévue sur la face inférieure du réservoir.

La présente invention a pour objet un réservoir de carburant à piège dans lequel l'amortissement des effets dynamiques du déferlement est particulièrement efficace.

Le réservoir selon l'invention, du type de celui décrit dans DE—A—2 847 117, est caractérisé en ce que la spirale délimite deux chambres qui communiquent l'une avec l'autre et dans lesquelles se trouvent respectivement la crépine de la tubulure d'aspiration du carburant et le puits de jauge. Le puits de jauge est ainsi également protégé des effets de désamorçage et de déferlement, et les indications données par la jauge sont fidèles et stables.

Le piège peut être rapporté sur le fond du réservoir; la nervure qui le constitue peut être également formée dans la paroi même du réservoir.

La nervure s'étend de préférence sur un angle supérieur à 360°, de préférence au moins égal à 450° de façon que le passage d'alimentation de la chambre, qui a une forme en spirale, ait une longueur notable.

Dans un mode de réalisation avantageux de l'invention, le piège comporte une nervure auxiliaire qui traverse la portion intérieure de la nervure en spirale, dont une extrémité est attenante à cette nervure alors que son autre extrémité en est séparée, et qui sépare les deux chambres l'une de l'autre.

Cette nervure auxiliaire peut notamment être sensiblement parallèle à la branche intérieure de la nervure en spirale. Elle est de préférence attenante à la branche intérieure de la nervure en spirale.

On a décrit ci-après, à titre d'exemple non limitatif, un mode de réalisation du réservoir à carburant selon l'invention, avec référence au dessin annexé dans lequel:

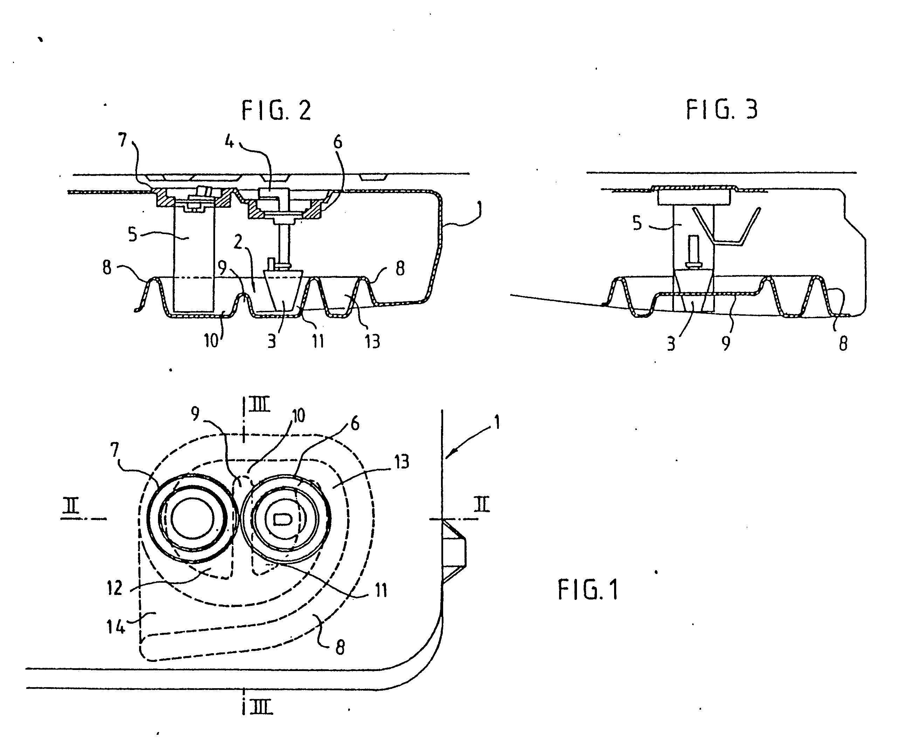

La Figure 1 est une vue en plan du réservoir;

La Figure 2 en est une coupe verticale suivant II—II de la Figure 1;

La Figure 3 en est une coupe verticale suivant III—III de la Figure 1.

Tel qu'il est représenté au dessin, le réservoir à carburant 1 comporte un piège à combustible 2 au droit du corps de crépine 3 qui est relié à une tubulure d'aspiration 4, et du puits de jauge 5. Le corps de crépine et cette jauge sont fixés à la paroi supérieure du réservoir par des bagues respectivement 6 et 7.

Le piège à combustible est constitué par une nervure 8 qui a approximativement la forme d'une spirale et est formée dans la paroi inférieure du réservoir. Cette nervure s'étend sur un angle d'environ 450° et sa portion inférieure est traversée par une nervure auxiliaire 9 de hauteur plus faible, dont une extrémité est attenante à la nervure en spirale 8 alors que son autre extrémité en est séparée par un espace 10. Dans l'exemple représenté, la nervure 9 est sensiblement perpendiculaire à l'extrémité de la branche extérieure de la nervure 8, donc sensiblement parallèle à l'extrémité de la branche intérieure de cette nervure. Son extrémité attenant à la nervure 8 est son extrémité la plus proche de la branche intérieure de cette nervure.

Les nervures 8 et 9 délimitent deux chambres 11 et 12 à l'intérieur desquelles sont disposés respectivement le corps de crépine 3 et le puits de jauge 5. Ces deux chambres communiquent l'une avec l'autre par l'espace 10 et avec l'extérieur par un passage en spirale 13 qui débouche à l'extérieur par une partie évolutive 14 en forme de convergent.

La réserve de combustible emprisonnée dans les chambres 11 et 12 est stabilisée par la nervure en spirale 8 ainsi que par la nervure auxiliaire 9. L'inertie de cette réserve et l'étranglement 10 ralentissent son échange avec la zone évolutive 14.

## Revendications

1. Réservoir de carburant à piège, dans lequel le piège est constitué par une nervure (8) ayant approximativement la forme d'une spirale qui est prévue sur la face inférieure du réservoir, caractérisé en ce que cette spirale délimite deux chambres (11) et (12) qui communiquent l'une avec l'autre et dans lesquelles se trouvent respectivement la crépine (3) de la tubulure d'aspiration du carburant et le puits de jauge (5).

2. Réservoir selon la revendication 1, caractérisé en ce que le piège est rapporté sur le fond du réservoir.

3. Réservoir selon la revendication 1, caractérisé en ce que la nervure constituant le piège est formée dans la paroi même du réservoir.

4. Réservoir selon l'une des revendications 1 à 3, caractérisé en ce que la nervure s'étend sur un angle supérieur à 360°, de préférence au moins égal à 450°.

5. Réservoir selon l'une quelconque des revendications précédentes, caractérisé en ce que le piège comporte une nervure auxiliaire (9) qui traverse la partie intérieure de la nervure en spirale (8), dont une extrémité est attenante à cette nervure alors que son autre extrémité en est séparée, et qui sépare les deux chambres (11) et (12) l'une de l'autre.

6. Réservoir selon la revendication 5, caractérisé en ce que la nervure auxiliaire (9) est sensiblement parallèle à la branche intérieure de la nervure en spirale (8).

7. Réservoir selon la revendication 5 ou 6, caractérisé en ce que la nervure auxiliaire (9) est attenante à la branche intérieure de la nervure en spirale.

## Patentansprüche

1. Kraftstofftank mit Falle, bit dem die Falle durch eine an der unteren Oberfläche des Tanks angeordnete Rippe (8) gebildet wird, die näherungsweise die Form einer Spirale aufweist, dadurch gekennzeichnet, daß diese Spirale zwei miteinander verbundene Kammern (11) und (12) begrenzt, in denen jeweils das Filter (3) des Kraftstoffansaugstutzens und der Meßgerät-Schacht (5) angeordnet sind.

2. Kraftstofftank nach Anspruch 1, dadurch gekennzeichnet, daß die Falle auf dem Boden des Tanks aufgesetzt ist.

3. Kraftstofftank nach Anspruch 1, dadurch gekennzeichnet, daß die die Falle bildende Rippe in die Wand des Tanks selbst eingepreßt ist.

4. Kraftstofftank nach einem der Ansprüche 1 bis 3, dadurch gekennzeichnet, daß die Rippe sich über einen Winkel von mehr als 360° vorzugsweise von mindestens 450° erstreckt.

5. Kraftstofftank nach einem oder mehreren der vorhergehenden Ansprüche, dadurch gekennzeichnet, daß die Falle eine Hilfsrippe (9) aufweist, die den inneren Teil der spiralförmigen Rippe (8) durchsetzt und deren eines Ende an diese Rippe angrenzt, während das andere Ende von ihr getrennt ist und die die beiden Kammern (11) und (12) voneinander trennt.

6. Kraftstofftank nach Anspruch 5, dadurch gekennzeichnet, daß die Hilfsrippe (9) im wesentlichen parallel zum Innenzweig der spiralförmigen Rippe (8) verläuft.

7. Kraftstofftank nach Anspruch 5 oder 6, dadurch gekennzeichnet, daß die Hilfsrippe (9) an den Innenzweig der spiralförmigen Rippe angrenzt.

## Claims

1. A fuel tank with strainer, in which the trap is formed by a rib (8) having approximately the shape of a spiral which is provided on the lower face of the tank, characterized in that this spiral defines two chambers (11) and (12) which communicate with each other and in which are to be found respectively the strainer (3) of the fuel intake pipe and the dip stick well (5).

2. Tank according to claim 1, characterized in that the trap is transferred to the bottom of the tank.

3. Tank according to claim 1, characterized in that the rib forming the trap is formed in the wall itself of the tank.

4. Tank according to one of claims 1 to 3, characterized in that the rib extends over an angle greater than 360°, preferably at least equal to 450°.

5. Tank according to any one of the preceding claims, characterized in that the trap comprises an auxiliary rib (9) which passes through the inner part of the spiral rib (8), one end of which is contiguous to this rib whereas its other end is separate therefrom, and which separates the two chambers (11) and (12) from each other.

6. Tank according to claim 5, characterized in that the auxiliary rib (9) is substantially parallel to the lower leg of the spiral rib (8).

7. Tank according to claim 5 or 6, characterized in that the auxiliary rib (9) is contiguous with the inner leg of the spiral rib.

FIG. 3

FIG. 2

FIG.1